# EUROPEAN PATENT APPLICATION

(11) **EP 3 544 381 A1**
(43) Date of publication of application: **25.09.2019**
(21) Application number: 19164739.5
(22) Date of filing: 22.03.2019
(51) Int. Cl.: H05B 6/80, B01J 19/12

(54) **VESSEL AND DISPOSABLE INNER SLEEVE FOR MICROWAVE ASSISTED REACTIONS**

(30) Priority: 23.03.2018 US 201815934164
(71) Applicant: CEM Corporation, Matthews, NC 28106-0200 (US)
(72) Inventor: Hargett, Wyatt P. Jr., Matthews, NC 28104 (US); Collins, Michael J. Sr., Matthews, NC 28104 (US)
(74) Representative: Tomkins & Co

(57) **Abstract**

A combination for carrying out microwave assisted reactions is disclosed, such as acid digestion and solvent extraction. The combination includes a microwave transparent pressure-resistant reaction vessel and a flexible film fluoropolymer liner inside the reaction vessel. The flexible film liner has a size and shape that substantially conforms to the inner walls of the reaction vessel. A pressure-relief closure is positioned on the reaction vessel and the flexible film liner, and an infrared temperature detector that operates in wavelengths (frequencies) to which both the reaction vessel and the flexible liner are transparent, so that an exact fit and conductive heating to the outside of the reaction vessel are not required.

## Description

### Background

The present invention relates to microwave assisted digestion and related sample-preparation reactions carried out under high temperature and pressure. Microwave assisted acid digestion is a sample preparation technique in which various samples (soil is particularly exemplary) are added in small amounts (e.g.,15 g) to acid-resistant, microwave transparent, pressure vessels along with an appropriate amount (e.g., 55 ml) of one or more strong mineral acids. In that regard, nitric acid (HNO₃) can be handled in glass, but hydrofluoric acid (HF) must be handled in fluoropolymer vessels.

When heated, such combinations tend to generate very high pressures, most of which come from carbonates (CO₃⁻²) or carbon-based compounds. Acid combinations (nitric plus hydrochloric) can lead to greater pressures than single acids (nitric alone), acids without samples can reach 12 atmospheres (atm) (1.2 MPa), and total pressures can reach 30 atm (3MPa) with samples.

Because the relevant samples are present in small concentration (usually parts per million, and sometimes parts per billion), the vessels must be scrupulously clean prior to each use. Because fluorinated hydrocarbon polymers tend to be porous (and thus absorbent), this cleaning step is time-consuming, requires a certain amount of expertise, and takes up laboratory space. Additionally, relevant regulatory schemes (e.g., US EPA Nos. 3051A and 3546) demand scrupulously clean reaction vessels.

As an additional problem, when a sample with an unknown amount of the relevant element(s) is used, the amount of the element may be very high, and can essentially spoil the vessel for a smaller content sample even after thorough cleaning. For example, if digestion is carried out on a sample that carries 500 ppm of a heavy metal, the vessel will generally thereafter be unsuitable for testing where the expected level would be 50 ppm of that metal.

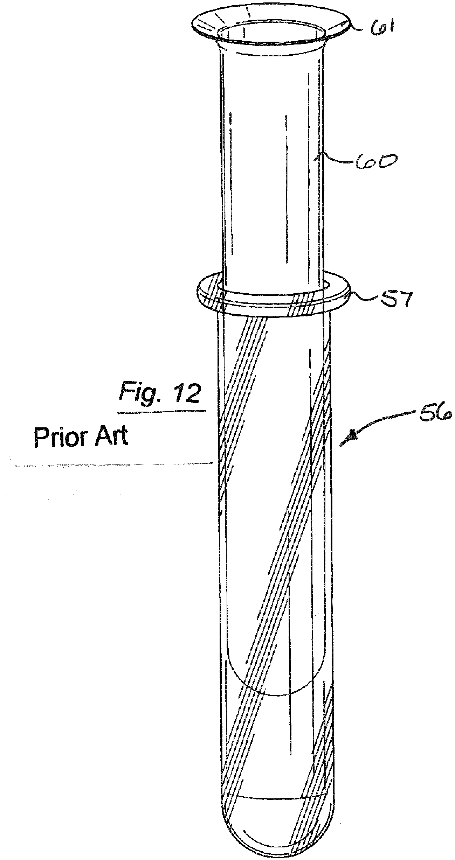

Vessel liners have been used previously (Figure 12). These liners must, however, be both rigid and very carefully machined to closely match and seat against the outer vessel so that (i) heat will transfer from the acid to the liner and then to the exterior of the vessel so that (ii) the temperature measurement taken on the outside of the vessel will reflect as closely as possible the temperature of the acid. Thus, in a relative sense, such closely machined liners are expensive.

A similar set of considerations applies to using microwave extraction as a sample preparation technique to isolate analytes from a sample matrix and into a solvent from which they can be identified.

Merely inserting a flexible liner is unsatisfactory because such liners do not conform to the inner surfaces of a reaction vessel. As a result, measuring the temperature of the vessel's outer surface fails to provide an accurate measurement of the temperature of the acid or solvent inside. This in turn precludes such liner use in regulated digestion methods such as US EPA No. 3051A or extraction methods such as EPA No. 3546.

### Summary

In one aspect, the invention is a combination for microwave assisted acid digestion and related sample-preparation reactions, that includes a microwave transparent pressure-resistant reaction vessel, a flexible film fluoropolymer liner inside the reaction vessel, the flexible film liner having a size and shape that substantially conforms to the inner walls of the reaction vessel, a pressure-relief closure on the reaction vessel and the flexible film liner, and an infrared temperature detector that operates in wavelengths (frequencies) to which both the reaction vessel and the flexible liner are transparent, so that an exact fit and conductive heating to the outside of the reaction vessel are not required.

In another aspect the invention is a method for digestion in strong mineral acids that includes the steps of adding a strong mineral acid and a digestion sample to a microwave transparent flexible film fluoropolymer liner that is chemically resistant (inert) to the strong mineral acid even at elevated temperatures inside of a closed microwave transparent pressure resistant reaction vessel, heating the strong mineral acid and the digestion sample with microwaves, and measuring the temperature of the strong mineral acid and the digestion sample using an infrared detector that measures wavelengths (frequencies) to which both the flexible film liner and pressure resistant vessel are transparent.

In another aspect the invention is a method for microwave assisted extraction that includes the steps of adding an organic solvent and an extraction sample to a microwave transparent flexible film fluoropolymer liner that is chemically resistant (inert) to the organic solvent even at elevated temperatures inside of a closed microwave transparent pressure resistant reaction vessel heating the organic solvent and the extraction sample with microwaves and measuring the temperature of the organic solvent and the extraction sample using an infrared detector that measures wavelengths (frequencies) to which both the flexible film liner and pressure resistant vessel are transparent.

In another aspect the invention is a method of assembling a disposable liner and a pressure resistant reaction vessel prior to carrying out a digestion reaction. The method includes the steps of spreading the mouth of a flexible film fluoropolymer liner, inserting the flexible film fluoropolymer liner with its mouth spread into a microwave transparent pressure resistant reaction vessel, adding a digestion acid and a digestion sample to the flexible film fluoropolymer liner in the reaction vessel, inserting a floating plug into the spread mouth of the flexible film fluoropolymer liner in the mouth of the reaction vessel, and securing the floating plug with a vessel closure.

In another aspect the invention is an assembly tool for the combination of a flexible film fluoropolymer liner and a microwave transparent pressure resistant reaction vessel. The assembly tool has a tool stem with a tapered truncated frustoconical nose on one end, and a sliding coaxial sleeve on the tool stem. The coaxial sleeve has a plurality of tapered fingers adjacent the nose of the tool stem, so that placing the liner on the fingers and moving the fingers coaxially with the stem spreads the mouth of the liner.

The foregoing and other objects and advantages of the invention and the manner in which the same are accomplished will become clearer based on the followed detailed description taken in conjunction with the accompanying drawings.

### Brief Description of the Drawings

Figure 1 is a perspective view of the exterior of a vessel system according to the present invention.
Figure 2 is an exploded perspective view of the vessel system of the present invention.
Figure 3 is a perspective view of a plurality of vessel systems positioned in a turntable as typically used in practice.
Figure 4 is a perspective view of a vessel liner according to the present invention.
Figure 5 is an exploded partial view of portions of the vessel system.
Figure 6 is an exploded view of an insertion tool according to the present invention.
Figure 7 is the perspective view of the insertion tool of Figure 6.
Figure 8 is a perspective view of upper portions of the tool of Figures 5 and 6 and a spread portion of the liner.
Figure 9 is a perspective view of portions of the vessel system with the liner in position.
Figure 10 is a perspective you of a vessel, a liner, and an insertion tool according to the present invention.
Figure 11 is a schematic diagram of aspects of the invention.
Figure 12 illustrates one example of a prior art vessel and liner system.

### Detailed Description

The invention is the combination of (i) a flexible fluoropolymer liner that can be inserted into the vessel, and that will withstand the expected temperatures of microwave assisted digestion (at least 175°C, often 200°C, and sometimes 250°C); used in conjunction with (ii) a particular temperature measurement arrangement.

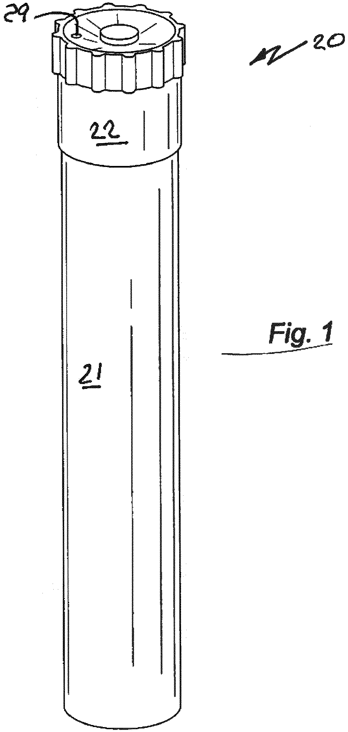

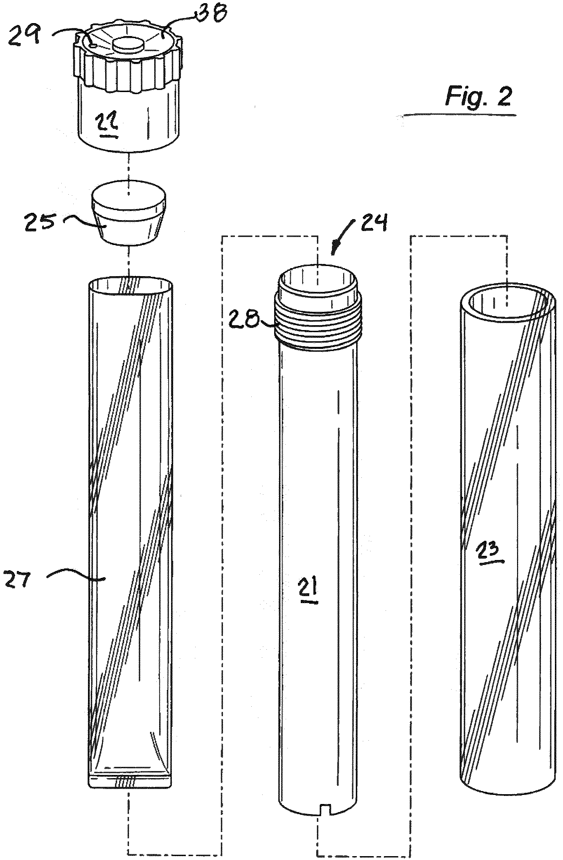

In a first aspect, the invention is a combination for microwave assisted acid digestion broadly indicated at 20 (Figure 1). The system includes a microwave transparent pressure resistant reaction vessel 21 with a flexible film fluoropolymer liner 27 (Figure 2) inside the reaction vessel 21. The flexible film liner 27 has a size and shape that generally conform to the inner walls of the reaction vessel 21.

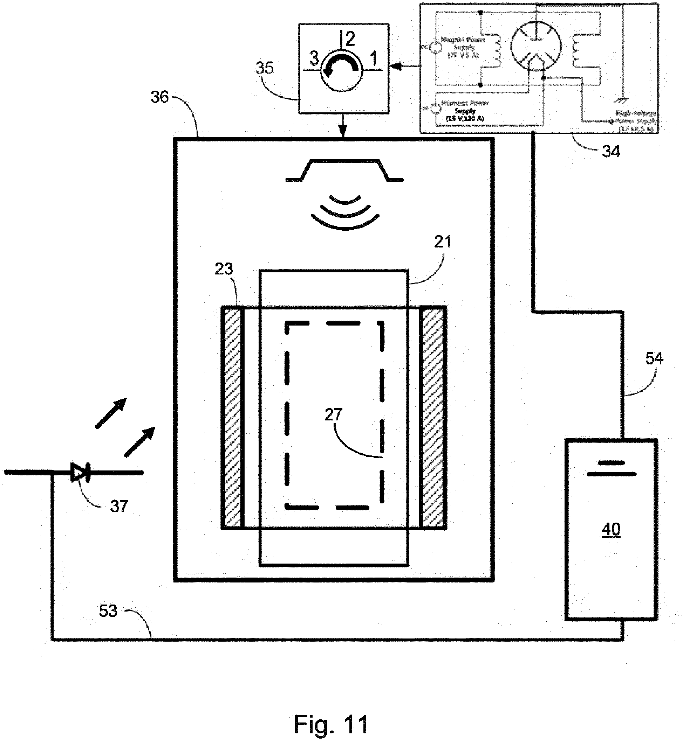

A pressure relief closure 22 is on the reaction vessel and the flexible film liner 27. An infrared temperature detector (37, Figure 11) operates in wavelengths (frequencies) to which both the reaction vessel 21 and the flexible liner 27 are transparent so that a precise temperature measurement of the digestion reagents and the digestion sample can be carried out even without an exact fit or conductive heat transfer to the outside of the vessel.

Figures 1, 2, and 5 all illustrate that the closure 22 includes a vent opening 29, the operation of which will be described and clarified with respect other drawings.

Figure 2 illustrates further elements of an embodiment of the invention. An outer reinforcing sleeve 23 surrounds the vessel 21 in order to provide additional radial strength to the reaction vessel 21. Because the outer reinforcing sleeve 23 touches neither the sample nor the mineral acids, it can be selected and formed from materials that offer the best combination of weight, strength, and cost factors. As set forth in (for example) commonly assigned US Patent No. 6927371, multiple layers of high-strength fibers molded into a high strength polymer provides a composite structure that has both the strength of the molded polymer, together with the flexibility and break resistance of the high strength fibers.

Figure 2 also illustrates the vessel mouth 24 and the floating plug 25 that, when the combination 20 is assembled, fits into the mouth 24. As used herein and as set forth in US Patent No. 8852533, the word "floating" means that the plug is placed in a resting relationship with respect to the vessel 21, the mouth 24 and the closure 22 without any mechanical advantage between and among the plug 25 and any of these other parts. The desired mechanical advantage is in most cases provided by the threads 28 and a corresponding set of threads on the closure 22 (not shown).

The contents of US6927371 and US8852533 are incorporated entirely herein by reference.

As set forth in US8852533, the floating plug is held in place by the reaction of the closure 22 (which can also be referred to as a lid) which is fixed to the vessel 21 using, in the illustrated embodiment, a threaded relationship including the male threads 28 on the reaction vessel 21. When the pressure inside the vessel 21, and in the invention inside the liner 27, exceeds a mechanically defined set point, the top 38 of the lid 22 can flex to allow the floating plug to move slightly and release gas pressure through the opening 29 while the digestion reaction continues. In some embodiments the flexibility of the lid portion 38 defines the pressure release set point, while in other embodiments (e.g. US6927371), the vessel system 20 is clamped inside of a frame, and a bolt or other clamp bears down (to an amount desired by the user) on the flexible portion 38 to define the pressure exerted and thus the pressure at which gas will escape.

Because the liner 27 must come into contact with strong mineral acids and the digestion sample, the liner material is selected from polymers that can be formed into the liner and that can resist the strong mineral acids, the high digestion temperatures, and accommodation of the accident high temperatures. In exemplary embodiments, the liner 27 is made out of materials such as perfluoroalkoxy (PFA) fluorinated ethylene propylene (FEP) or polyvinylidene difluoride (PVDF). Although polytetrafluoroethylene (PTFE, for example as sold under the brand name Teflon®) has a number of the desired benefits, it cannot be formed into films for the liner at costs as advantageously as PFA or FEP.

PFA (Perfluoroalkoxy) is a true melt-processable fluoropolymer. In service it is considered interchangeable with PTFE in terms of its chemical service and temperature and pressure characteristics. PTFE has the highest permeation performance of the fluoropolymers, even greater than paste extruded PTFE. PFA also provides the smoothest and least wettable finish of all of the fluoropolymers. The trade-off, however, is cost, with PFA being more expensive than PTFE.

FEP (Fluorinated Ethylene Propylene) is another melt-processable fluoropolymer. It does not have the almost universal chemical resistance of PTFE and PFA and its maximum operating temperature in service is 150°C. Where the chemical performance and temperature range above 150°C are not issues, FEP provides a less expensive alternative to PFA. FEP can be conveniently made into sheets.

PVDF (Polyvinylidene difluoride) is an engineering fluoropolymer and has a more limited range of chemicals performance and an upper temperature limit of 120°C. Although replaced in many applications by the improved performance of PTFE resins, PVDF remains a material of choice for low temperature halogen applications (e.g., bromine and chlorine).

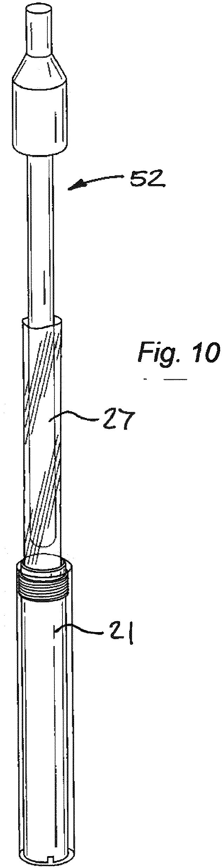

As will be described again in detail with respect to Figure 10, the combination according to the invention also includes a microwave cavity 36 in which the vessel combination 20 is positioned along with a source of microwave radiation 34 that propagates microwaves into the cavity 36.

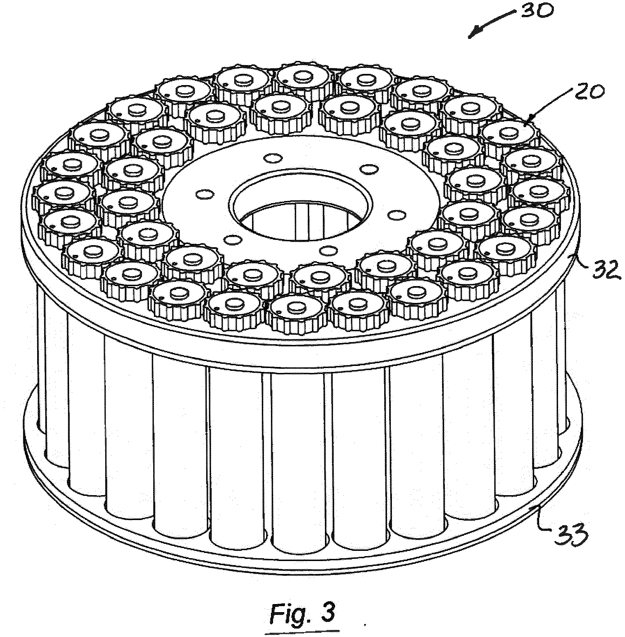

Figure 3 is a perspective view of the embodiment 20 of Figures 1 and 2 show in context as one of a plurality of such vessel systems positioned in a turntable 30 defined by upper 32 and lower 33 racks. The vessel systems 20 are placed in openings in the racks 32, 33 and move in an orbital path around the center of the turntable 30 as the turntable 30 rotates within a microwave cavity (36, Figure 10) during the digestion process.

The advantages of rotating the vessels 20 on the turntable 30 include the ability to carry out a number of digestions at the same time in the same cavity, while also accommodating the standing node nature of microwaves in cavities of the size and shape into which the turntable 30 and the vessels 20 will fit.

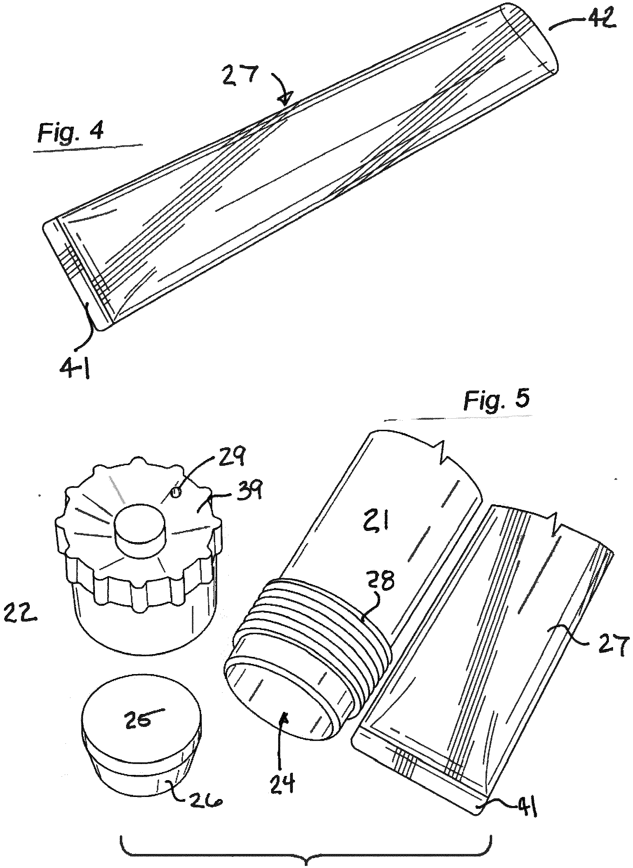

Figure 4 is a perspective view of the inner liner 27. Figure 4 illustrates that the liner includes a seal 41 at one end and a mouth 42 at the opposite end.

Figure 5 shows enlarged views of the closure 22, its flexible portion 39, and its vent opening 29. The floating plug 25 includes a tapered (or frustoconical) portion 26 that helps the plug 25 to move more easily and appropriately under conditions of elevated pressure as previously described. Figure 5 also shows a portion of the reaction vessel 21, the liner 27 and the liner seal 41, together with the mouth of the vessel 24 and the threads 28.

Although the use of the word "disposable" is essentially the user's choice based upon their budget, the liners of the invention are currently expected to retail in the US$1 range. In exchange for this price point, the user (many of whom are testing laboratories that conduct dozens or hundreds of tests each day) can avoid the time and labor costs of vessel cleaning.

The invention includes the use of an infrared detector for which both the liner and the vessel are transparent to the detector frequencies. For example, fluorinated polymers are transparent within the region (approximately) of 1000 nm-7.50 micron. Thus, the detector measures infrared (IR) radiation within some or all of the 1000 nm-7.50 µm range

Because of that, the disposable liner does not need to provide a heat conductive pathway from the hot acid to the external surface of the vessel to give a proper temperature measurement. In fact, because the infrared detector is sensitive to wavelengths to which the vessel and the liner are transparent, the temperature measurement can be more accurate than conventional systems.

In another aspect the invention is a method for digestion in strong mineral acids that includes the steps of adding a strong mineral acid and a digestion sample to a microwave transparent flexible film fluoropolymer liner (e.g., 27) that is chemically resistant or inert to the strong mineral acid selected even at elevated temperatures and positioned inside of a closed microwave transparent pressure resistant reaction vessel (e.g. 21).

The strong mineral acid and the digestion sample are heated in the vessel and liner with microwave radiation, and measuring the temperature of the strong mineral acid and the digestion sample using a IR detector (e.g., 37, Figure 10) that measures wavelengths (frequencies) to which both the flexible film 27 liner and the pressure resistant vessel 21 are transparent.

The method can further comprise the steps of opening the reaction vessel, typically after cooling to near ambient temperature (to allow the interior pressure to subside), removing the acid and the digestive sample from the liner 27 and removing the liner 27 from the vessel 21, and thereafter adding a new liner 27 to the reaction vessel without any intervening step or otherwise cleaning the reaction vessel 21.

The invention further comprises the steps of repeating the entire digestion process with microwaves and temperature measurement for a new sample in the new liner.

As set forth previously, the strong mineral acids are typically selected from the group consisting of nitric (HNO₃), sulfuric (H₂SO₄), hydrofluoric (HF), and hydrochloric (HCl), as well as mixtures of two or more of these acids.

In order to work with these acids, and is set forth with respect to the structural aspects, the liner is typically formed of PFA, FEP or PVDF. The vessel that holds the liner can be selected from these polymers, or additionally from PTFE, or from any other polymer that otherwise can withstand the expected pressure and temperatures, and the corrosive aspects of the strong mineral acids.

In the method, the pressure resistant vessel is closed with a fixed force and vented without otherwise opening the reaction vessel when the pressure inside the vessel exceeds the applied fixed force.

The invention is particularly useful with EPA Method 3051A (https://www.epa.gov/sites/production/files/2015-12/documents/3051a.pdf; accessed March 5, 2018), which is incorporated entirely herein by reference.

In particular, EPA Method 3051A at § 6.1.1 requires that a microwave decomposition system sense the temperature to within ± 2.5°C, automatically adjust the microwave field output power within 2 seconds of sensing, and use temperature sensors that are accurate to ± 2°C.

EPA Method 3051A at § 9.2.4 ("Preparation of reference samples for specific determinative methods") lists various post-digestion testing methods.

In another embodiment, the invention is a method for microwave assisted extraction, of which US EPA 3546 is exemplary (https://www.epa.gov/hw-sw846/sw-846-test-method-3546-microwave-extraction; accessed March 23, 2018). Microwave extraction uses microwave energy to produce elevated temperature and pressure conditions (i.e., 100-115 °C and 50-175 psi in the extraction context).

Microwave extraction is applicable to, inter alia, the extraction of semi-volatile organic compounds, organophosphorus pesticides, organochlorine pesticides, chlorinated herbicides, phenoxy acid herbicides, substituted phenols, polychlorinated biphenyls (PCBs), polychlorinated dibenzodioxins (PCDDs; "dioxins"), and polychlorinated dibenzofurans (PCDFs), which may then be analyzed by a variety of procedures (e.g., chromatography). Microwave extraction can also be applicable for the extraction of additional types of analytes that the skilled person can incorporate without undue experimentation.

Typically, microwave extraction is carried out on solid matrices containing from 50 to 10,000 microgram per kilogram (µg/kg) of semi-volatile organic compounds, 250 to 2,500 µg/kg of organophosphorus pesticides, 10 to 5,000 µg/kg of organochlorine pesticides and chlorinated herbicides, 50 to 2,500 µg/kg of substituted phenols, 100 to 5,000 µg/kg of phenoxy acid herbicides, 1 to 5,000 µg/kg of PCBs, or and 10 to 6000 ng/kg of PCDDs/PCDFs.

Microwave extraction frequently uses a solvent mixture of hexane and acetone (1:1) for matrices such as soil and sand. Other organic solvents or solvent systems are well understood in the extraction arena and can be selected by the skilled person without undue experimentation. Hexane is a water-immiscible solvent and acetone is a water-miscible solvent. The water-miscible solvent helps facilitate the extraction of wet solids by allowing the mixed solvent to penetrate the layer of water on the surface of the solid particles. The water immiscible solvent extracts organic compounds with similar polarities.

In addition to its convenience advantages, the use of the liner helps the user meet relevant regulatory requirements. Both EPA 3051A and 3546 require stringent control of vessels in order to avoid false positive or otherwise erroneous results (e. g., "the analyst should demonstrate that all parts of the equipment are interference-free; § 9.3 of EPA 3546; see also § 4.1 of EPA 3051A).

The use of the liner according to the invention also simplifies post-reaction waste management (§ 15.0 of EPA 3546; §§ 14 and 15 of EPA 3051A).

In the extraction embodiment the invention includes the steps of adding an organic solvent and an extraction sample to a microwave transparent flexible film fluoropolymer liner that is chemically resistant (inert) to the organic solvent even at elevated temperatures inside of a closed microwave transparent pressure resistant reaction vessel, heating the organic solvent and the extraction sample with microwaves, and measuring the temperature of the organic solvent and the extraction sample using an infrared detector that measures wavelengths (frequencies) to which both the flexible film liner and pressure resistant vessel are transparent.

In the extraction embodiment the method can also include the steps of closing the pressure resistant vessel with a fixed force and venting the vessel without otherwise opening the reaction vessel when the pressure inside the vessel exceeds the fixed applied force.

The extraction method can further include the post-extraction steps of opening the reaction vessel, removing the organic solvent and the extraction sample from the liner and removing the liner from the vessel, and thereafter adding a new liner to the reaction vessel without an intervening step of otherwise cleaning the reaction vessel. The liner thus enables carrying out a new microwave assisted extraction on a new sample, in the new liner.

As in the other embodiments, the melt-formable fluoropolymer for the liner is selected from the group consisting of perfluoroalkoxy, fluorinated ethylene propylene and polyvinylidene difluoride.

For a number reasons, the liner 27 is most effective with the floating plug 25 when the mouth of the liner 27 is wider than the remainder of the liner 27. Liners can be manufactured with a wider mouth, but doing so adds a fairly significant cost increase. Accordingly, the method of the invention further comprises spreading the mouth of the flexible film fluoropolymer liner 27, inserting the flexible film fluoropolymer liner 27 with its mouth spread into the microwave transparent pressure resistant vessel 21, adding the digestion acid and the digestion sample to the liner 27 in the reaction vessel 21, inserting the floating plug 25 into the spread mouth 42 of the liner 27 in the mouth 24 of the reaction vessel 21, and then securing the floating plug 25 with vessel closure 22.

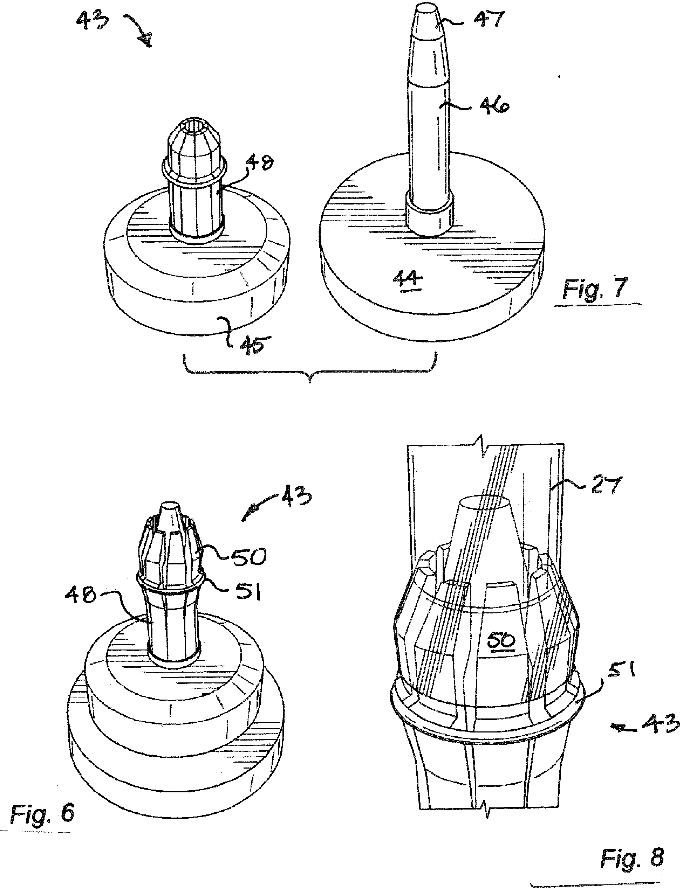

In this aspect, the invention further comprises an assembly tool for the combination of the liner 27 and the reaction vessel 21. As illustrated in Figures 6, 7 and 8, the assembly tool includes a tool stem 46 with a tapered truncated frustoconical nose 47 on one end of the stem 46 and a sliding coaxial sleeve 48 on the tool stem 46. The coaxial sleeve 48 has a plurality of tapered fingers 50 adjacent the nose 47 of the tool stem 46 so that placing the liner on the fingers and moving the fingers coaxially with the stem spreads the mouth of the liner.

In the illustrated embodiment, the assembly tool further includes a tool base 44 with the tool stem 46 mounted perpendicularly on the tool base 44 with the tapered truncated frustoconical nose 47 on the opposite end of the tool stem 46 from the tool base 44. A finger base 45 parallel to the tool base 44 carries the sliding coaxial sleeve 48 perpendicularly on the finger base 45 so that moving the finger base 45 relative to the tool base 44 spreads the tapered tool fingers 50 and, when a liner 27 is on the fingers 50, the fingers 50 spread the mouth of the liner.

Figures 6, 7 and 8 also illustrate a circumferential annular spring illustrated as the O-ring 51 for exerting an inward radial force against the tapered tool fingers 50.

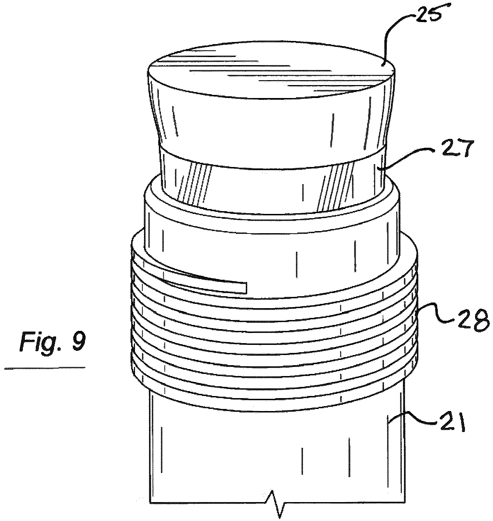

Figure 9 is an enlarged view of the relationship between the plug 25, the upper portions of the reaction vessel 21, and the spread mouth 42 of the liner 27.

Figure 10 illustrates the advantageous simplicity of the method and structure of the invention. Figure 10 illustrates that the liner 27 can be positioned in the reaction vessel 21 with a straightforward insertion tool 52. As set forth herein, because the temperature measurement does not depend on conducting heat from the inside of the liner 27 to the outside of the vessel 21, the exact positioning of the liner 27 in the vessel 21 is not critical.

Figure 11 is a schematic view of the elements of the invention. Figure 11 illustrates the vessel 21, the inner liner 27, the outer reinforcing sleeve 23 and the closure 22 inside of a microwave cavity 36. The infrared detector is illustrated as the diode 37, and as set forth elsewhere in the specification and claims, the diode 37 measures wavelengths (frequencies) to which all three of the inner liner, the reaction vessel 21 and the outer reinforcing sleeve 23 are transparent.

Although as set forth herein the invention makes unique use of particular optical relationships, the general optical relationships between and among wavelengths of electromagnetic radiation, optical (or other) materials, and detector ranges are well understood in the art and can be selected by the skilled person without undue experimentation.

Microwaves are propagated into the cavity from the source 34, of the most common of which are magnetrons, but can also include klystrons, and IMPATT diodes. The operation of any one or more of these is well understood to the skilled person.

The diode 37 can be positioned inside or outside of the cavity 36. If inside, the diode 37 must be positioned or shielded (e.g., a microwave choke) to avoid interference from the microwaves in the cavity 36. If outside, the diode 37 must have a free and IR-transparent optical path to the vessel 21. These are straightforward design choices that can be carried out by the skilled person, and without undue experimentation.

In many cases, a waveguide 35 is used to bridge the position of the source 34 and the cavity 36 and to help propagate the microwaves in an intended matter.

Because EPA Test No. 3051A and other similar tests require accurate temperature measurement and feedback within defined time intervals, both the source 34 and the detector 37 operate in conjunction with a processor 40, to which the source 34 and the detector 37 are connected through the respective communication lines 53 and 54

Figure 12 is a perspective illustration of one prior art arrangement offered for comparison. Figure 12 illustrates a reaction vessel 56 which is typically formed of quartz for a number of reasons including its transparency to a wide range of wavelengths from ultraviolet, through visible, and into the near infrared. The vessel 56 includes a structural lip 57. A rigid vessel liner 60 has a size and shape that conforms as closely as possible to the interior of the quartz vessel 56. A corresponding structural lip 61 on the liner 60 helps seat the rigid liner 60 in the proper position in the vessel 56. To repeat the disadvantage, such a close fit (and the associated expense of manufacturing both the quartz vessel 56 and the liner 60 to close tolerances) is required because in typical devices the temperature measurement is taken from the outside of the quartz vessel. Because of that, an accurate measurement requires efficient heat conduction from the digestion acids and the sample through the liner 60 and then through the vessel 56.

The liner and vessel system of the present invention avoids the need for, and the cost and effort of obtaining, these close tolerances.

In the drawings and specification there has been set forth a preferred embodiment of the invention, and although specific terms have been employed, they are used in a generic and descriptive sense only and not for purposes of limitation, the scope of the invention being defined in the claims.

## Claims

1. A combination for carrying out microwave assisted reactions, comprising:
a microwave transparent pressure-resistant reaction vessel;
a flexible film fluoropolymer liner inside said reaction vessel, said flexible film liner having a size and shape that substantially conforms to the inner walls of said reaction vessel;
a pressure-relief closure on said reaction vessel and said flexible film liner; and
an infrared temperature detector that operates in wavelengths (frequencies) to which both said reaction vessel and said flexible liner are transparent (so that an exact fit and conductive heating to the outside of the reaction vessel are not required).

2. A combination for microwave assisted reactions according to claim 1 further comprising an outer reinforcing sleeve surrounding said reaction vessel.

3. A combination for microwave assisted reactions according to claim 1 or claim 2 wherein said pressure relief closure comprises:
a floating plug seated in the mouth of said reaction vessel and the mouth of said flexible film liner; and
a reaction vessel lid fixable to said pressure resistant reaction vessel in a pressure resistant relationship; and
a pressure relief opening in said lid.

4. A combination for microwave assisted reactions according to any of the preceding claims wherein said microwave transparent pressure resistant vessel is formed of PTFE.

5. A combination for microwave assisted reactions according to any of the preceding claims wherein said fluoropolymer liner is formed of a melt-formable polymer.

6. A combination for microwave assisted reactions according to claim 5 wherein said melt-formable fluoropolymer is selected from the group consisting of perfluoroalkoxy, fluorinated ethylene propylene and polyvinylidene difluoride.

7. A combination for microwave assisted reactions according to any of the preceding claims further comprising:
a microwave cavity in which said combination is positioned; and
a source of microwave radiation that propagates microwaves into said microwave cavity.

8. A method for digestion in strong mineral acids comprising the steps of:
adding a strong mineral acid and a digestion sample to a microwave transparent flexible film fluoropolymer liner that is chemically resistant (inert) to the strong mineral acid even at elevated temperatures inside of a closed microwave transparent pressure resistant reaction vessel;
heating the strong mineral acid and the digestion sample with microwaves; and
measuring the temperature of the strong mineral acid and the digestion sample using an infrared detector that measures wavelengths (frequencies) to which both the flexible film liner and pressure resistant vessel are transparent.

9. A method for digestion in strong mineral acids according to claim 8 further comprising the post-digestion steps of:
opening the reaction vessel;
removing the acid and the digested sample from the liner and removing the liner from the vessel; and
thereafter adding a new liner to the reaction vessel without an intervening step of otherwise cleaning the reaction vessel; optionally comprising carrying out a new digestion on a new sample, in the new liner.

10. A method for digestion in strong mineral acids according to claim 8 or claim 9 wherein the acid is selected from the group consisting of nitric, sulfuric, hydrofluoric, hydrochloric, and mixtures thereof; and/or
wherein the melt-formable fluoropolymer is selected from the group consisting of perfluoroalkoxy, fluorinated ethylene propylene and polyvinylidene difluoride; and/or
further comprising:
closing the pressure resistant vessel with a fixed force; and
venting the vessel without otherwise opening the reaction vessel when the pressure inside the vessel exceeds the fixed applied force.

11. A method of assembling a disposable liner and a pressure resistant reaction vessel prior to carrying out a digestion reaction, the method comprising:
spreading the mouth of a flexible film fluoropolymer liner;
inserting the flexible film fluoropolymer liner with its mouth spread into a microwave transparent pressure resistant reaction vessel;
adding a digestion acid and a digestion sample to the flexible film fluoropolymer liner in the reaction vessel;
inserting a floating plug into the spread mouth of the flexible film fluoropolymer liner in the mouth of the reaction vessel; and
securing the floating plug with a vessel closure;
optionally further comprising:
heating the strong mineral acid and the digestion sample with microwaves; and measuring the temperature of the strong mineral acid and the digestion sample using an infrared detector that measures wavelengths (frequencies) to which both the flexible film liner and pressure resistant vessel are transparent;
optionally further comprising:
the post-digestion steps of:
opening the reaction vessel (after cooling to near ambient);
removing the acid and the digested sample from the liner and removing the liner from the vessel; and
thereafter adding a new liner to the reaction vessel without an intervening step of otherwise cleaning the reaction vessel; optionally comprising carrying out a new digestion on a new sample, in the new liner.

12. An assembly tool for the combination of a flexible film fluoropolymer liner and a microwave transparent pressure resistant reaction vessel said assembly tool comprising:
a tool stem having a tapered truncated frustoconical nose on one end; and
a sliding coaxial sleeve on said tool stem, said coaxial sleeve having a plurality of tapered fingers adjacent said nose of said tool stem (so that placing the liner on the fingers and moving the fingers coaxial with the stem spreads the mouth of the liner); optionally further comprising
a tool base, with said tool stem mounted perpendicularly on said tool base with said tapered truncated frustoconical nose on the opposite end of said tool stem from said tool base; and
a finger base parallel to said tool base and with said sliding coaxial sleeve perpendicular on said finger base; optionally further comprising a circumferential annual spring for exerting an inward radial force against said tapered fingers of said tool.

13. A method for microwave assisted extraction comprising the steps of:
adding an organic solvent and an extraction sample to a microwave transparent flexible film fluoropolymer liner that is chemically resistant (inert) to the organic solvent even at elevated temperatures inside of a closed microwave transparent pressure resistant reaction vessel;
heating the organic solvent and the extraction sample with microwaves; and
measuring the temperature of the organic solvent and the extraction sample using an infrared detector that measures wavelengths (frequencies) to which both the flexible film liner and pressure resistant vessel are transparent.

14. A method for microwave assisted extraction according to claim 13 further comprising the post-extraction steps of:
opening the reaction vessel;
removing the organic solvent and the extraction sample from the liner and removing the liner from the vessel; and
thereafter adding a new liner to the reaction vessel without an intervening step of otherwise cleaning the reaction vessel; optionally comprising carrying out a new microwave assisted extraction on a new sample, in the new liner.

15. A method for microwave assisted extraction according to claim 14 wherein the organic solvent is selected from the group consisting of acetone, hexane, and mixtures thereof; and/or wherein the melt-formable fluoropolymer is selected from the group consisting of perfluoroalkoxy, fluorinated ethylene propylene and polyvinylidene difluoride; and/or further comprising:
closing the pressure resistant vessel with a fixed force; and
venting the vessel without otherwise opening the reaction vessel when the pressure inside the vessel exceeds the fixed applied force.
